# EUROPÄISCHE PATENTANMELDUNG

(11) **EP 4 806 776 A1**
(43) Veröffentlichungstag der Anmeldung: **16.09.2026**
(21) Anmeldenummer: 26157177.2
(22) Anmeldetag: 09.02.2026
(51) Int. Cl.: B62J 50/21

(54) **VERFAHREN UND SYSTEM ZUR AUSWERTUNG DER KÖRPERHALTUNG EINES RADFAHRERS, UND FAHRRAD**

(30) Priorität: 10.03.2025 DE 102025108858
(71) Anmelder: Canyon Bicycles GmbH, 56073 Koblenz (DE)
(72) Erfinder: Jrab, Mazen, 60598 Frankfurt am Main (DE); Debelak, Kyle, 70180 Stuttgart (DE)
(74) Vertreter: dompatent

(57) **Zusammenfassung**

Die Erfindung betrifft ein 1. Verfahren zur, insbesondere aerodynamischen, Auswertung der Körperhaltung, eines Radfahrers, mit einem am Fahrrad (10) angeordneten Sensor (20), wobei das Verfahren die Schritte aufweist: Erfassen der Körperhaltung, insbesondere des Oberkörpers, des Radfahrers beim Radfahren mit dem Sensor (20), und Ausgeben von Informationen über die Körperhaltung. Ferner betrifft die Erfindung ein System (18) zur, insbesondere aerodynamischen, Auswertung der Körperhaltung, eines Radfahrers; sowie ein Fahrrad (10).

## Beschreibung

Die Erfindung betrifft ein Verfahren und ein System zur, insbesondere aerodynamischen, Auswertung der Körperhaltung eines Radfahrers. Ferner betrifft die Erfindung ein Fahrrad mit einem solchen System.

Die Körperhaltung von Radfahrern und die daraus resultierende Aerodynamik haben entscheidenden Einfluss auf die Performance des Radfahrers. Bisherige Ansätze zur Optimierung der Körperhaltung umfassen bspw. eine Auswertung von Videomaterial des Radfahrers oder eine Beurteilung durch Dritte, z. B. Trainer. Die Anpassung der Körperhaltung des Radfahrers während der Fahrt, insbesondere zur Umsetzung einer möglichst guten Aerodynamik, basiert generell auf der Erfahrung und/oder dem Gefühl des Radfahrers.

Problematisch dabei ist, dass eine optimale Körperhaltung häufig nicht, z. B. nicht über längere Zeit und/oder angepasst auf die aktuelle Situation und Gegebenheit, erreicht wird.

Aufgabe der Erfindung ist es, ein Verfahren und ein System zur Evaluation, insbesondere Optimierung, der Körperhaltung beim Radfahren, bevorzug während des, Radfahrens zu schaffen.

Die Lösung der Aufgaben erfolgt erfindungsgemäß durch ein Verfahren gemäß Anspruch 1, ein System gemäß Anspruch 10 und ein Fahrrad gemäß Anspruch 12.

Das erfindungsgemäße Verfahren zur, insbesondere aerodynamischen, Auswertung der Körperhaltung, eines Radfahrers wird mittels eines am Fahrrad angeordneten Sensors durchgeführt. Das Verfahren weist den Schritt des Erfassens der Körperhaltung, insbesondere des Oberkörpers, des Radfahrers beim Radfahren mit dem Sensor auf. Ferner weist das Verfahren den Schritt des Ausgebens von Informationen über die Körperhaltung anhand der erfassten Körperhaltung auf. Die Ausgabe der Informationen kann insbesondere direkt, also live während der Fahrt, an den Radfahrer erfolgen und/oder es kann eine Übertragung bspw. über Internet an einen anderen Ort erfolgen und/oder es kann eine Aufzeichnung und späteres Wiedergeben erfolgen. Vorzugsweise erfolgt ein Bereitstellen der Information über die Körperhaltung mittels einer, insbesondere mit dem Fahrrad verbundenen, Steuereinheit. Die Steuereinheit ist insbesondere zur Auswertung der vom Sensor erfassten Körperhaltung eingerichtet. Die Auswertung kann bspw. mittels eines Mobilgeräts, das datenübertragend, z. B. mittels Bluetooth, mit dem Sensor verbunden ist erfolgen. Das Mobilgerät entspricht dabei somit insbesondere der Steuereinheit. Bei einem Mobilgerät im Rahmen der vorliegenden Offenbarung handelt es sich insbesondere um ein Mobiltelefon, wie ein Smartphone oder ein Wearable, wie eine Smartwatch.

Es ist bevorzugt, dass der Sensor mit dem Lenker, dem Lenkervorbau, dem Lenkerrohr und/oder dem Oberrohr des Fahrrads verbunden, bspw. darin integriert ist. Möglich ist es bspw., dass der Sensor in den Lenker, den Lenkervorbau, das Lenkerrohr und/oder das Oberrohr eingelassen ist.

Ferner umfasst die Erfindung ein System zur, insbesondere aerodynamischen, Auswertung der Körperhaltung, eines Radfahrers. Das System weist einen am Fahrrad anzuordnenden oder daran angeordneten Sensor auf, wobei der Sensor dazu eingerichtet und insbesondere ausgerichtet ist, die Körperhaltung, insbesondere des Oberkörpers, des Radfahrers beim Radfahren zu erfassen. Ferner weist das System eine, insbesondere mit dem Fahrrad verbundene, Steuereinheit zur Auswertung der vom Sensor erfassten Körperhaltung auf. Die Steuereinheit weist bspw. den Mikrokontroller STM832F401 auf oder besteht daraus.

Die nachfolgend beschriebenen Merkmale betreffen insbesondere das erfindungsgemäße Verfahren und/oder die erfindungsgemäße Vorrichtung.

Es ist bevorzugt, dass es sich bei dem Sensor um einen optischen Sensor handelt, der die Körperhaltung des Radfahrers erfasst.

Es ist bevorzugt, dass der Sensor ein Time-of-Flight (ToF) Sensor ist. Bei dem Sensor, insbesondere dem ToF-Sensor, handelt es sich insbesondere um einen Sensor, der Licht, vorzugsweise mit einer Wellenlänge von ca. 940 nm, besonders bevorzugt Infrarotlicht, als Messsignal abstrahlt. Bei dem Tof-Sensor handelt es sich bspw. um einen VL53L8. Anstelle oder zusätzlich zu dem ToF-Sensor kann als Sensor bspw. ein Lidar-Sensor und/oder ein Ultraschallsensor-Array genutzt werden.

Es ist bevorzugt, dass der Sensor den Abstand mehrerer Bereiche des Körpers, insbesondere des Oberkörpers, misst. Vorzugsweise misst der Sensor den Abstand der mehreren Bereiche des Körpers zum Sensor und/oder zum Anbringungsort an dem Fahrrad. Der Sensor ist insbesondere zur Erfassung des Körpers, bevorzugt des Oberkörpers, relativ zum Fahrrad, ausgeführt. Vorzugsweise wird über den gemessenen Abstand, bspw. mittels der Steuereinheit, die Körperhaltung erfasst. Der Sensor ist insbesondere eingerichtet den Körper, vorzugsweise den Oberkörper, des Radfahrers als ein Raster, z. B. ein Schachbrettraster zu erfassen. Das Raster weist mehrere Messpunkte, bspw. mindestens vier, bevorzugt mindestens 16, besonders bevorzugt mindestens 36 Messpunkte, auf. Z. B. kann das Raster mindestens 4x4. mindestens 6x6 oder mindestens 8x8 Messpunkte aufweisen. Der Sensor, bspw. der ToF-Sensor, tastet den Körper des Radfahrers insbesondere als Raster ab, sodass vorzugsweise das vom Sensor abgegebene Messsignal, bspw. Licht, in der Rasterform auf den Körper trifft. Es ist bevorzugt, dass der Oberkörper flächenmäßig erfasst wird, wobei es besonders bevorzugt ist, dass der Oberkörper dreidimensional erfasst wird.

Bevorzugt wird anhand der erfassten Werte, insbesondere der gemessenen Abstände, die Geometrie, z. B. ein Modell, der aktuellen Körperhaltung, bspw. mittels der Steuereinheit, ermittelt, vorzugsweise extrapoliert. Z. B. kann mindestens eine, mehrere oder alle der folgenden Körperhaltungen ermittelt werden: eine Climbing-Position, eine Aufrecht-Position, ein Freihandfahrt-Position, eine Einhändigfahrt-Position und mindestens eine oder mehrere Aero-Positionen. Zu den zu ermittelnden Körperhaltungen zählt insbesondere auch eine Griffhaltung des Radfahrers, wobei bspw. ein Oberlenker-Griff, ein Unterlenker-Griff, ein Bremsgriff und/oder ein Aerobar-Griff ermittelt werden kann.

Es ist bevorzugt, dass das Verfahren den weiteren Schritt des Erfassens von auf den Radfahrer einwirkendem Wind, bspw. Seitenwind, Rückenwind und/oder Frontalwind, aufweist. Insbesondere weist das Fahrrad einen Windsensor zum Erfassen des Winds auf. Zusätzlich oder alternativ weist das Verfahren insbesondere den weiteren Schritt des Erfassens der Leistung auf. Insbesondere weist das Fahrrad einen Leistungsmesser zum Erfassen der Leistung auf. Durch die erfasste Leistung und/oder den Wind wird insbesondere ein CdA (Coefficient of Drag Area, Strömungswiderstandskoeffizient) gemessen. Vorzugsweise wird hierdurch ermittelt, wann sich der Radfahrer in der besten aerodynamischen Position befindet. Weitergehend kann insbesondere mithilfe von maschinellem Lernen die Aerodynamik eines Radfahrers, bspw. während einer kurzen Trainingsphase, analysiert und so die optimale Fahrhaltung individuell ermittelt werden. Anhand dieser Daten werden sodann insbesondere personalisierte Empfehlungen zur Verbesserung der Aerodynamik und/oder der Fahrleistung an den Radfahrer abgegeben. Somit können insbesondere vorteilhaft individuelle, anstatt allgemeine vordefinierte, Daten zur besten aerodynamischen Position bereitgestellt werden.

Es ist bevorzugt, dass das Verfahren den weiteren Schritt des Simulierens der Aerodynamik des Radfahrers anhand der erfassten Körperhaltung aufweist. Vorzugsweise wird zum Simulieren der Aerodynamik neben der Körperhaltung, z. B. der ermittelten Geometrie, der erfasste Wind einbezogen. Insbesondere ist die Steuereinheit eingerichtet die Aerodynamik zu simulieren.

Es ist bevorzugt, dass das Verfahren den weiteren Schritt des Ausgebens eines Änderungs-, insbesondere Optimierungsvorschlags, an den Radfahrer zur Anpassung der Aerodynamik, aufweist. Der Änderungsvorschlag wird bevorzugt anhand der erfassten Körperhaltung, z. B. der ermittelten Geometrie, der simulierten Aerodynamik und/oder des erfassten Winds, erzeugt. Insbesondere wird der Änderungsvorschlag mittels der Steuereinheit erzeugt.

Es ist bevorzugt, dass Rechenschritte, bspw. das Simulieren und/oder das Ermitteln alternativ oder zusätzlich das Ausgeben von Informationen mittels eines Mobilgeräts, insbesondere des Radfahrers, erfolgt. Das System weist insbesondere ein entsprechendes Mobilgerät auf.

Es ist bevorzugt, dass das System eine am Fahrrad anzuordnende oder am Fahrrad angeordnete Feedbackvorrichtung zur Ausgabe von Informationen anhand der erfassten Körperhaltung aufweist. Die Feedbackvorrichtung umfasst bspw. ein Display, einen Lautsprecher und/oder einen, insbesondere eine LED aufweisenden, Leuchtindikator. Bei dem Display handelt es sich bspw. um ein Mobilgerätdisplay oder ein integriert mit dem Fahrrad ausgeführtes Display. Die Ausgabe der Informationen im Rahmen des erfindungsgemäßen Verfahrens erfolgt insbesondere mit der Feedbackvorrichtung.

Insbesondere erfolgt die Ausführung des Verfahrens und/oder das Erfassen der Körperhaltung über einen längeren Zeitraum, bevorzugt kontinuierlich. Die Erfassung und/oder die Ausgabe erfolgt insbesondere live, also während des Radfahrens.

Die Erfindung betrifft ferner ein Fahrrad, insbesondere ein Rennrad, mit einem erfindungsgemäßen System zur Auswertung der Körperhaltung, wobei der Sensor mit dem Fahrradrahmen des Fahrrads verbunden ist.

Es ist bevorzugt, dass das System, insbesondere der Sensor mit dem Lenker, den Lenkervorbau, dem Lenkerrohr und/oder dem Oberrohr des Fahrrads verbunden, bspw. darin integriert ist. Möglich ist es bspw., dass der Sensor in den Lenker, den Lenkervorbau, das Lenkerrohr und/oder das Oberrohr eingelassen ist. Alternativ oder zusätzlich ist es insbesondere möglich, dass das System, vorzugsweise der Sensor, eine Fixiervorrichtung, bevorzugt zur lösbaren, Fixierung mit dem Fahrrad aufweist.

Nachfolgend wird die Erfindung anhand bevorzugter Ausführungsformen unter Bezugnahme auf die anliegenden Zeichnungen näher erläutert.

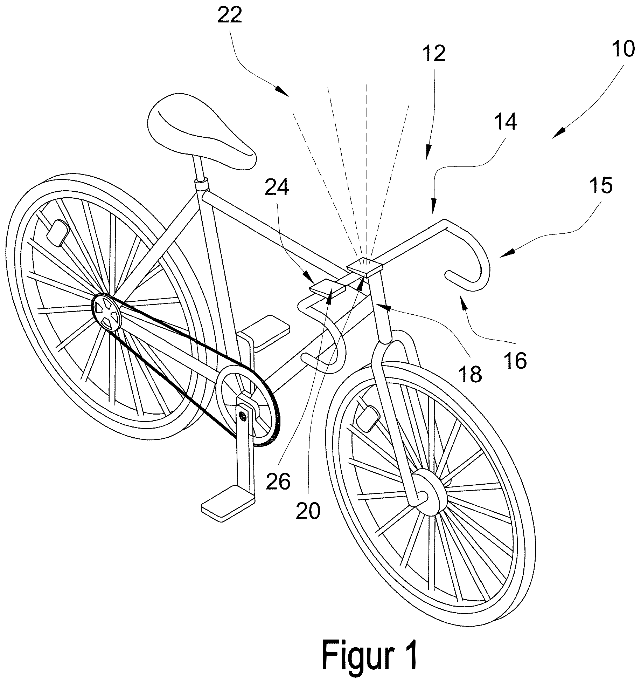

Es zeigt: Fig. 1 eine schematische Darstellung einer Ausführungsform eines erfindungsgemäßen Fahrrads mit einer Ausführungsform eines erfindungsgemäßen Systems.

Figur 1 zeigt ein Fahrrad 10, wobei es sich um ein Rennrad handelt. Das Fahrrad 10 weist einen Lenker 12 mit einem Obergriff 14, einem Untergriff 16 und einem dazwischenliegenden Bremsgriff 15 auf.

Mit dem Lenker 12 ist ein System 18 zur, insbesondere aerodynamischen, Auswertung der Körperhaltung, eines Radfahrers (nicht dargestellt) verbunden.

Das System 18 weist einen Sensor 20, insbesondere einen ToF-Sensor, und ein Display 24 auf. Dargestellt sind Sensor 20 und Display 24 mit dem Lenker 12, bspw. über eine Fixiervorrichtung (nicht dargestellt), verbunden. Alternativ ist es insbesondere möglich, dass der Sensor 20 und/oder das Display 24 in den Lenker integriert, bspw. darin eingelassen ist.

Der Sensor 20 gibt Messsignale 22, insbesondere Licht, zum Erfassen der Körperhaltung, bevorzugt des Oberkörpers, des Radfahrers (nicht dargestellt) ab. Möglich ist es, dass, bspw. zusätzlich, die Griffpositionen des Radfahrers, also z. B. ein Griff am Oberlenker 14, am Bremsgriff 15 oder am Unterlenker 16 erfasst wird.

Auf dem Display 24 können sodann Informationen 26 über die Körperhaltung abgegeben werden. Bspw. können hierbei Informationen zur Anpassung der Körperhaltung zur Umsetzung einer optimalen Aerodynamik des Radfahrers an den Radfahrer abgegeben werden. Eine derartige Information kann bspw. mittels Text und/oder eines Piktogramms des Radfahrers abgegeben werden, wobei Änderungsvorschläge dargestellt werden. Zusätzlich oder alternativ kann ein Griffwechsel vorgeschlagen werden. Die Bereitstellung der auszugebenden Information erfolgt insbesondere über eine Steuereinheit (nicht dargestellt), die z. B. in den Sensor 20 integriert sein kann.

Anstelle der dargestellten Ausführung mit extra Display 24, ist es insbesondere auch möglich, dass die Information auf einem Mobilgerät, z. B. einem Mobiltelefon oder einer Smartwatch, des Radfahrers ausgegeben wird. Hierbei ist z. B. eine Datenübertragung des Sensors 20 an das Mobilgerät mittels Bluetooth möglich. Auch ist es bspw. denkbar, dass die erfasste Körperhaltung gespeichert und/oder extern, z. B. zur Auswertung und/oder Überwachung übertragen wird.

Mit der dargestellten Ausführungsform kann insbesondere das erfindungsgemäße Verfahren durchgeführt werden.

## Patentansprüche

1. Verfahren zur, insbesondere aerodynamischen, Auswertung der Körperhaltung, eines Radfahrers, mit
einem am Fahrrad (10) angeordneten Sensor (20), wobei das Verfahren die Schritte aufweist:
- Erfassen der Körperhaltung, insbesondere des Oberkörpers, des Radfahrers beim Radfahren mit dem Sensor (20), und
- Ausgeben von Informationen über die Körperhaltung.

2. Verfahren nach Anspruch 1, **dadurch gekennzeichnet, dass** der Sensor (20) mit dem Lenker (12), dem Lenkervorbau, dem Lenkerrohr und/oder dem Oberrohr des Fahrrads (10) verbunden, bspw. darin integriert ist.

3. Verfahren nach Anspruch 1 oder 2, **dadurch gekennzeichnet, dass** es sich bei dem Sensor (20) um einen optischen Sensor handelt.

4. Verfahren nach Anspruch 3, **dadurch gekennzeichnet, dass** der Sensor (20) ein Time-of-Flight, ToF, Sensor (20) ist.

5. Verfahren nach einem der Ansprüche 1-4, **dadurch gekennzeichnet, dass** der Sensor (20) den Abstand mehrere Bereiche des Körpers, insbesondere des Oberkörpers, misst.

6. Verfahren nach einem der Ansprüche 1-5, **dadurch gekennzeichnet, dass** das Verfahren den weiteren Schritt aufweist:
- Erfassen von auf den Radfahrer einwirkenden Wind.

7. Verfahren nach einem der Ansprüche 1-6, **dadurch gekennzeichnet, dass** das Verfahren den weiteren Schritt aufweist:
- Simulieren der Aerodynamik des Radfahrers anhand der erfassten Körperhaltung.

8. Verfahren nach einem der Ansprüche 1-7, **dadurch gekennzeichnet, dass** das Verfahren den weiteren Schritt aufweist:
- Ausgeben eines Änderungs-, insbesondere Optimierungsvorschlags, an den Radfahrer zur Anpassung der Aerodynamik.

9. Verfahren nach einem der Ansprüche 1-8, **dadurch gekennzeichnet, dass** Rechenschritte und/oder Ausgaben mittels eines Mobilgeräts, insbesondere des Radfahrers, erfolgen.

10. System (18) zur, insbesondere aerodynamischen, Auswertung der Körperhaltung, eines Radfahrers, mit
einem am Fahrrad (10) anzuordnenden Sensor (20), insbesondere ToF-Sensor, wobei der Sensor (20) dazu eingerichtete ist die Körperhaltung, insbesondere des Oberkörpers, des Radfahrers beim Radfahren zu erfassen, und
einer, insbesondere mit dem Fahrrad (10) verbundenen, Steuereinheit zur Auswertung der vom Sensor (20) erfassten Körperhaltung.

11. System (18) nach Anspruch 10, **dadurch gekennzeichnet, dass** das System (18) eine am Fahrrad (10) anzuordnende oder am Fahrrad (10) angeordnete Feedbackvorrichtung, bspw. umfassend ein Display (24), einen Lautsprecher und/oder einen Leuchtindikator, zur Ausgabe von Informationen anhand der erfassten Körperhaltung aufweist.

12. Fahrrad (10), insbesondere Rennrad, mit einem System (18) nach einem der Ansprüche 10-11, wobei der Sensor (20) mit dem Fahrradrahmen des Fahrrads (10) verbunden ist.

13. Fahrrad (10) nach Anspruch 12, **dadurch gekennzeichnet, dass** der Sensor (20) mit dem Lenker (12), dem Lenkervorbau, dem Lenkerrohr und/oder dem Oberrohr des Fahrrads (10) verbunden, bspw. darin integriert ist.
